# DEMANDE DE BREVET EUROPEEN

(11) **EP 1 244 199 A1**
(43) Date de publication de la demande: **25.09.2002**
(21) Numéro de dépôt: 02360065.3
(22) Date de dépôt: 13.02.2002
(51) Int. Cl.: H02K 17/08, H02K 17/30, E06B 9/72, H02K 11/00

(54) **Moteur d'entrainement pour système de fermeture du type volet roulant**

(30) Priorité: 22.03.2001 FR 0103902; 17.04.2001 FR 0105175
(71) Demandeur: Bubendorff Volet Roulant Société Anonyme, 68300 Saint-Louis (FR)
(72) Inventeur: Evreux, Gérard, 74130 Ayze (FR)
(74) Mandataire: Rhein, Alain

(57) **Abrégé**

L'invention concerne un moteur d'entraînement tubulaire, du type asynchrone à condensateur (5), pour store ou système de fermeture, tel que volet roulant ou similaire, comportant, dans le prolongement de l'une (3) de ses extrémités, un carter (4), d'une part, prévu apte à le rendre solidaire d'un support approprié et, d'autre part, à même d'accueillir au moins ledit condensateur (5).

Ce moteur d'entraînement est caractérisé par le fait que ce condensateur (5) est défini de forme sensiblement annulaire, de manière à délimiter, dans le prolongement axial du moteur (1), un logement (8) pour l'intégration, en tout ou partie, des éléments constitutifs de l'unité de gestion (6) du fonctionnement dudit moteur (1).

## Description

L'invention concerne un moteur d'entraînement tubulaire du type asynchrone à condensateur, pour système de fermeture tel que volet roulant, store ou similaire, comportant, dans le prolongement de l'une de ses extrémités, un carter d'une part prévu apte à le rendre solidaire d'un support approprié et, d'autre part, à même d'accueillir au moins ledit condensateur.

La présente invention concerne le domaine des moteurs d'entraînement tubulaire, du type asynchrone à condensateur, tel que ceux équipant des systèmes de fermeture, par exemple des volets roulants ou encore des stores.

Usuellement, de tels moteurs d'entraînement tubulaires sont destinés à être logés dans un tube d'enroulement, par exemple d'un tablier de volet roulant ou d'un store, avec lequel ils coopèrent, à l'une de leurs extrémités, au travers d'un mécanisme d'entraînement approprié, habituellement un réducteur. A leur extrémité opposé de tels moteurs tubulaires sont rendus solidaires d'un support fixe. En fait, entre la partie moto-réducteur et ledit support, s'étend, souvent, un carter prévu apte à accueillir, tout particulièrement, le condensateur volumineux dont sont nécessairement équipés de tels moteurs asynchrones. Dans ce carter peuvent encore prendre position les composants électroniques d'une unité de gestion de fonctionnement du moteur.

Evidemment, l'encombrement que génère ce condensateur et la carte électronique définissant, substantiellement, l'unité de gestion du fonctionnement précité, a une répercussion directe sur la taille du moteur. Or, plus un tel moteur tubulaire est long, plus il est difficile d'en équiper des systèmes de fermeture, plus particulièrement des volets roulants, de petite dimension.

Il est encore connu, par le document FR-A-2.731.037, un dispositif de montage d'un tube d'enroulement, notamment d'un volet roulant où le tube correspondant au moteur constitue le prolongement d'une embase formant un boîtier. Plus particulièrement, cette embase est constituée, d'une part, d'un socle dont l'épaisseur est au plus égale à celle de la joue support correspondante dans laquelle il vient se loger et, d'autre part, par un prolongement tubulaire dont le diamètre est au plus égal à celui du tube d'enroulement.

En fin de compte, dans cette embase prennent position les moyens de commande électroniques destinés au moteur. Plus particulièrement, le socle, disposé dans l'épaisseur de la joue support, renferme les composants électroniques de petite taille, disposés usuellement sur une carte électronique, tandis que le prolongement tubulaire sert au logement de composants de taille plus importante, en particulier, du condensateur.

En somme, dans une telle réalisation on cherche à profiter de la place disponible de part et d'autre du tube d'enroulement du volet roulant, plus particulièrement à hauteur des paliers de ce dernier, pour y déporter, au moins en partie, l'unité de gestion de fonctionnement de ce moteur.

L'on comprend, évidemment, qu'une telle conception nécessite la réalisation d'une joue support spécifique, de sorte qu'un ensemble bloc-moteur n'est pas systématiquement adapté à tout type d'implantation d'un volet roulant au niveau d'une construction. En particulier, ces blocs moteurs ne peuvent, souvent, équiper des volets roulants existants.

Par ailleurs, dans ces documents antérieurs il a été exposé les inconvénients qu'engendre le déport de cette unité de gestion de fonctionnement du volet roulant en dehors du caisson, par exemple dans un boîtier encastré ou en applique sur le mur de la construction.

Finalement, si l'on prend en compte ces différentes conceptions de l'état de la technique, l'on s'aperçoit que, dans tous les cas, le condensateur, sous forme d'un bloc compact et aux dimensions conséquentes, constitue une pièce encombrante, en ce sens qu'elle vient nécessairement augmenter la taille, en longueur, du moteur tubulaire.

Finalement, la présente invention a pour but de remédier aux inconvénients précités au travers d'une conception spécifique du condensateur, allant à l'encontre des usages dans le domaine. Plus particulièrement en venant optimiser la forme de ce dernier et s'il continue à se situer préférentiellement dans le prolongement du moteur tubulaire, il permet de préserver, au niveau de l'emplacement qu'il occupe, un espace libre autorisant l'intégration de tout ou partie des composants électroniques définissant l'unité de gestion de fonctionnement de ce volet roulant.

A cet effet, l'invention concerne un moteur d'entraînement tubulaire, du type asynchrone à condensateur, pour système de fermeture, tel que volet roulant, store ou similaire, comportant, dans le prolongement de l'une de ses extrémités, un carter, d'une part, prévu apte à le rendre solidaire d'un support approprié et, d'autre part, à même d'accueillir au moins ledit condensateur, caractérisé en ce que ce condensateur est défini de forme sensiblement annulaire de manière à délimiter, dans le prolongement axial du moteur, un logement pour l'intégration, en tout ou partie, des éléments constitutifs de l'unité de gestion du fonctionnement dudit moteur.

L'invention sera mieux comprise à la lecture de la description qui va suivre se rapportant au dessin ci-joint.

La figure 1 est une représentation schématisée, partielle et en coupe d'un moteur d'entraînement tubulaire conforme à l'invention.

La figure 2 est une vue similaire à la figure précédente illustrant un autre mode de réalisation.

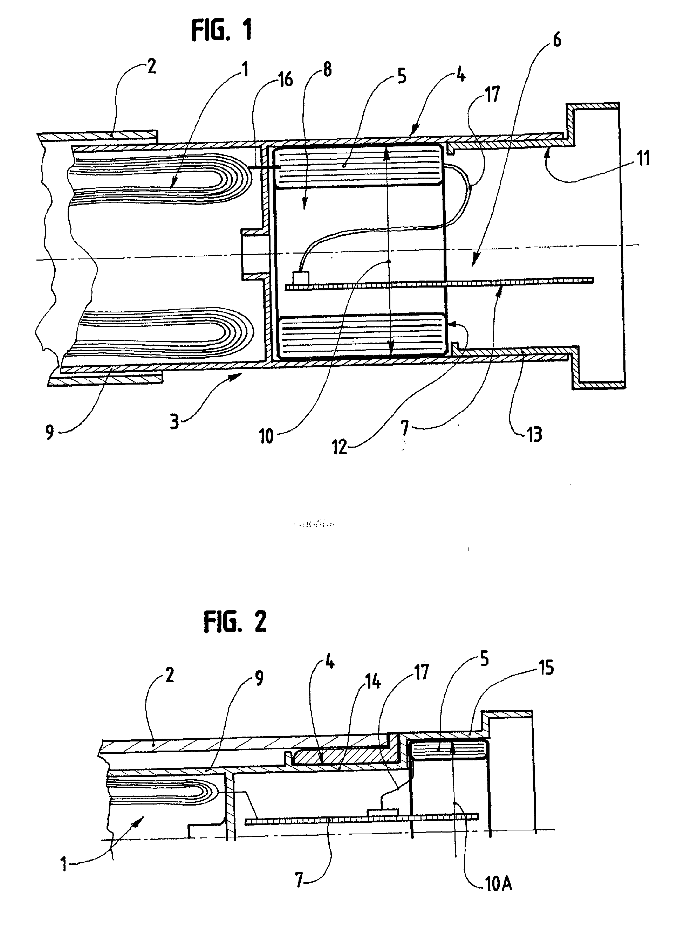

La présente invention a trait à un moteur d'entraînement tubulaire 1, représenté de manière partielle dans les figures 1 et 2 du dessin ci-joint. Ce moteur est plus particulièrement destiné à des systèmes de fermeture, du type volet roulant, ou encore à des stores.

Ainsi, l'on voit dans ces figures une représentation partielle de l'arbre d'enroulement 2 dans une extrémité duquel est prévu apte à être engagé ce moteur d'entraînement tubulaire 1, sachant que sur cet arbre d'enroulement 2 est à même de venir s'enrouler le tablier d'un tel volet roulant ou la toile d'un store.

Dans le prolongement d'une des extrémités 3 de ce moteur 1 est défini un carter 4, d'une part, prévu apte à le rendre solidaire d'un support approprié, par exemple d'une joue support (non illustrée) comme l'on en trouve, habituellement, dans les caissons abritant le mécanisme d'entraînement de tels volets roulants.

Dans la mesure où ces moteurs d'entraînement de systèmes de fermeture ou similaires sont du type asynchrones à condensateur, dans ce carter 4, dans le prolongement dudit moteur 1, vient prendre position, ce condensateur 5, dont la taille est nécessairement conséquente.

Finalement, le carter 4 peut encore accueillir tout ou partie des éléments constitutifs d'une unité de gestion 6 du fonctionnement de ce moteur 1. Très fréquemment, une telle unité de gestion 6 est définie par une carte électronique 7.

En fait, selon une particularité de la présente invention, le condensateur 5 est défini de forme sensiblement annulaire et vient s'étendre, sensiblement axialement, dans le prolongement du moteur tubulaire 1. Ainsi, concentriquement à ce condensateur 5 et dans ce prolongement du moteur 1, est délimité un logement 8 dans lequel il peut être intégré tout ou partie des éléments constitutifs de l'unité de gestion 6. Tout particulièrement, comme visible dans les figures, à l'intérieur de ce logement 8 délimité par le condensateur annulaire 5 peut être inséré, partiellement, ladite carte électronique 7.

Selon un premier mode de réalisation visible dans la figure 1, le carter 4 présente une section circulaire au diamètre sensiblement égal au tube renfermant ledit moteur 1. Par ailleurs, en vue d'optimiser l'espace disponible, le condensateur annulaire 5 comporte lui-même un diamètre externe 10 sensiblement égal au diamètre interne de ce carter 4.

Selon un autre mode de réalisation correspondant à la figure 2, ledit carter 4 peut se subdiviser en deux partie 14, 15, un peu à la manière décrite dans le document FR-A-2.731.037, dont l'une 14 présente une section circulaire au diamètre sensiblement égal au tube renfermant ledit moteur 1 pour venir s'engager dans le tube d'enroulement 2 et dont l'autre partie 15 constitue un prolongement tubulaire de la partie 14 précédente et dont le diamètre est au plus égal à celui de ce tube d'enroulement 2. Dans ce cas et comme visible dans cette figure 2, le condensateur annulaire 5 peut être d'un diamètre externe 10A sensiblement égal au diamètre interne de cette partie 15 du carter 4 définissant un prolongement dudit tube d'enroulement 2.

Il convient d'observer qu'en raison de cette conception, ce condensateur 5 peut être maintenu dans le carter 4 par l'intermédiaire d'une bride d'extrémité 11. Selon un mode de réalisation préférentiel, cette dernière forme couvercle et comporte une virole 13 s'étendant intérieurement dans le carter tubulaire 4 de manière à prendre appui sur le pourtour et à l'extrémité 12, opposée à celle orientée vers le moteur 1, dudit condensateur annulaire 5.

Par ailleurs, s'il a été illustré, dans les figures, une unité de gestion 6 sous forme d'une unique carte électronique 7 s'étendant, partiellement, dans le logement 8 délimité par le condensateur annulaire 5, il est tout à fait imaginable que d'optimiser les dimensions de cette carte électronique 7 ou encore de la subdiviser en deux cartes distinctes de manière à lui permettre d'être insérée dans son intégralité dans ledit logement 8.

A ce propos et selon une autre caractéristique de la présente invention, au condensateur 5 sont associés des moyens de connexion 16, 17, du type mâle ou femelle, lui permettant de coopérer, directement lors du montage, avec des moyens de connexion complémentaires, femelles ou mâles, que comporte, selon le cas, une carte électronique 7 et/ou le moteur 1.

## Revendications

1. Moteur d'entraînement tubulaire, du type asynchrone à condensateur (5), pour système de fermeture, tel que volet roulant ou similaire, comportant, dans le prolongement de l'une (3) de ses extrémités, un carter (4), d'une part, prévu apte à le rendre solidaire d'un support approprié et, d'autre part, à même d'accueillir au moins ledit condensateur (5), **caractérisé par le fait que** ce condensateur (5) est défini de forme sensiblement annulaire, de manière à délimiter dans le prolongement axial du moteur (1) un logement (8) pour l'intégration, en tout ou partie, des éléments constitutifs de l'unité de gestion (6) du fonctionnement dudit moteur (1).

2. Moteur d'entraînement tubulaire selon la revendication 1, **caractérisé par le fait que** le carter (4) présente une section circulaire au diamètre sensiblement égal au tube (9) renfermant ledit moteur (1).

3. Moteur d'entraînement tubulaire selon l'une quelconque des revendications précédentes, **caractérisé par le fait que** le condensateur annulaire (5) comporte un diamètre externe (10) sensiblement égal au diamètre interne du carter (4).

4. Moteur d'entraînement tubulaire selon la revendication 1, **caractérisé par le fait que** le carter (4) se subdivise en deux partie (14, 15), dont l'une (14) présente une section circulaire au diamètre sensiblement égal au tube (9) renfermant ledit moteur (1) et dont l'autre partie (15) constitue un prolongement tubulaire de la partie (14) précédente et dont le diamètre est au plus égal à celui d'un tube d'enroulement (2) prévu pour accueillir ledit moteur tubulaire (1).

5. Moteur d'entraînement tubulaire selon la revendication 4, **caractérisé par le fait que** le condensateur annulaire (5) comporte un diamètre externe (10A) sensiblement égal au diamètre interne de la partie (15).

6. Moteur d'entraînement tubulaire selon l'une quelconque des revendications précédentes, **caractérisé par le fait que** le condensateur (5) est maintenu dans le carter (4) par l'intermédiaire d'une bride d'extrémité (11) formant couvercle et comportant une virole (13) s'étendant intérieurement dans ce carter (4) de manière à prendre appui sur le pourtour et à l'extrémité (12), opposée à celle orientée vers le moteur (1), dudit condensateur annulaire (5).

7. Moteur d'entraînement tubulaire selon l'une quelconque des revendications précédentes, **caractérisé en ce qu'**au condensateur (5) sont associés des moyens de connexion (16, 17), du type mâle ou femelle, lui permettant de coopérer avec des moyens de connexion complémentaires, femelles ou mâles, que comporte, selon le cas, une carte électronique (7) et/ou le moteur (1).
